# EUROPEAN PATENT SPECIFICATION

(11) **EP 4 636 681 B1**
(45) Date of publication and mention of the grant of the patent: **03.06.2026**
(21) Application number: 24170645.6
(22) Date of filing: 16.04.2024
(51) Int. Cl.: G06T 1/00

(54) **METHOD FOR REPRESENTING AND ANALYZING REGIONS OF INTEREST IN IMAGES USING GRID OVERLAY**
VERFAHREN ZUR DARSTELLUNG UND ANALYSE VON REGIONEN VON INTERESSE IN BILDERN MIT RASTERÜBERLAGERUNG
PROCÉDÉ DE REPRÉSENTATION ET D'ANALYSE DE RÉGIONS D'INTÉRÊT DANS DES IMAGES À L'AIDE D'UN RECOUVREMENT DE GRILLE

(43) Date of publication of application: 22.10.2025
(73) Proprietor: RaySearch Laboratories AB, 104 30 Stockholm (SE)
(72) Inventor: ENGLUND, Jonas, 211 10 MALMÖ (SE)

(56) References cited:
- RANGANATHAN A ET AL: "Visual place categorization in maps", INTELLIGENT ROBOTS AND SYSTEMS (IROS), 2011 IEEE/RSJ INTERNATIONAL CONFERENCE ON, IEEE, 25 September 2011 (2011-09-25), pages 3982 - 3989, XP032200720, ISBN: 978-1-61284-454-1, DOI: 10.1109/IROS.2011.6094523
- IVAN E SUTHERLAND ET AL: "A Characterization of Ten Hidden-Surface Algorithms", ARXIV.ORG, CORNELL UNIVERSITY LIBRARY, 201 OLIN LIBRARY CORNELL UNIVERSITY ITHACA, NY 14853, vol. 6, no. 1, 1 March 1974 (1974-03-01), pages 1 - 55, XP058191190, DOI: 10.1145/356625.356626
- RICHTER D. ET AL: "Upgrade and benchmarking of a 4D treatment planning system for scanned ion beam therapy", MEDICAL PHYSICS., vol. 40, no. 5, 1 May 2013 (2013-05-01), US, XP093211896, ISSN: 0094-2405, DOI: 10.1118/1.4800802
- FOX CHRISTOPHER ET AL: "Fast voxel and polygon ray-tracing algorithms in intensity modulated radiation therapy treatment planning", MEDICAL PHYSICS, AIP, MELVILLE, NY, US, vol. 33, no. 5, 25 April 2006 (2006-04-25), pages 1364 - 1371, XP012092105, ISSN: 0094-2405, DOI: 10.1118/1.2189712
- SHIMRAT M: "Algorithm 112: Position of point relative to polygon", ARXIV:2003.08934V1, UNITED STATES, vol. 5, no. 8, 1 August 1962 (1962-08-01), pages 434, XP059187792, DOI: 10.1145/368637.368653
- WIKIPEDIA: "Point in polygon - Wikipedia", 15 August 2018 (2018-08-15), XP093207413, Retrieved from the Internet <URL:https://en.wikipedia.org/w/index.php?title=Point_in_polygon&oldid=855028247> [retrieved on 20240925]
- STROOM AND P R M STORCHI J C: "AUTOMATIC CALCULATION OF THREE DIMENSIONAL MARGINS AROUND TREATMENT VOLUMES IN RADIOTHERAPY PLANNING", PHYSICS IN MEDICINE AND BIOLOGY, INSTITUTE OF PHYSICS PUBLISHING, BRISTOL GB, vol. 42, 1 January 1997 (1997-01-01), pages 745 - 755, XP001536604, ISSN: 0031-9155, DOI: 10.1088/0031-9155/42/4/011

## Description

### Technical Field

The present invention relates to the field of image processing, particularly for analysing and representing regions of interest (ROIs) within images, such as medical images, gaming purposes or virtual reality and augmented reality. The invention involves the use of ROI algebra to identify polygons in an image that can represent different regions within the image with varying levels of detail. The primary application of this technology is in medical imaging, specifically in the analysis of slice images from computer tomography scans or magnetic resonance imaging scans. It can however also be used for other purposes such as for the gaming industry or any other industry that requires image processing, such as for example augmented and virtual reality, surveillance and satellite applications. The method involves overlaying the image with a grid, calculating intersection points between the polygon lines and grid lines, and establishing a grid representation of the polygon. This technology can be utilized in radiation therapy planning systems to accurately identify and represent regions of interest within medical images.

### Background

The field of image processing, particularly with respect to medical imaging, has been the subject of considerable research and development. This sector is primarily concerned with the generation, analysis, and manipulation of images in order to extract meaningful information for a variety of applications ranging from diagnostics to treatment planning.

One aspect within this domain involves the detection and representation of regions of interest (ROIs), which are essentially segments or areas within an image that hold significant information or data about targets such as tumours or melanomas and/or organs at risk or other tissue that should be considered during treatment. Two possible methods of ROI algebra are: Contour ROI algebra and Voxel ROI algebra.

Contour ROI algebra operates on a two-dimensional plane, leveraging polygon representations of ROIs. The method focuses on detecting intersections between polygon line segments associated with participating ROIs. Subsequently, it performs ROI algebra by tracing the line segments belonging to one ROI until it encounters an intersection point. While relatively straightforward and effective in certain scenarios, this approach presents notable limitations when handling more complex or three-dimensional images as it confines analysis within a two-dimensional framework. It also has limitations when the ROI consists of several polygons. Contour ROI algebra can usually only address one single, closed polygon and not several polygons when more than one polygon has to be added to - or subtracted from one another.

Voxel ROI algebra introduces a three-dimensional perspective to the process by operating directly on voxel representations of ROIs. In voxel algebra or voxel ROI algebra, each region is represented as a volume comprising voxels, which could be envisaged as three-dimensional pixels. The algorithm then performs ROI algebra pixel by pixel across this volumetric construct and across the ROI.

Despite its proficiency in dealing with three-dimensionality compared to its contour-based counterpart, voxel ROI algebra also exhibits its own unique challenges. For instance, it requires substantially higher computational resources due to the increased complexity associated with implementing pixel-wise operations across voluminous data structures. Additionally, the accuracy and precision involved in extracting meaningful information at such a granular level might often be constrained by factors such as image resolution and processing power.

Polygons have inherent merits when applied to geometric representation tasks due to their structural simplicity combined with their capacity to approximate complex shapes reasonably well through strategic composition. However, overlap or intersection situations involving multiple polygons can generate issues during representation or analysis stages if not handled judiciously.

Overall, while offering valuable methodologies for identifying and representing regions of interest within images they are not without their drawbacks - especially those related to computational efficiency and adaptability towards varying complexities that may arise due to multiple dimensions or overlapping regions within images.

A. Ranganathan et al., "Visual place categorization in maps", INTELLIGENT ROBOTS AND SYSTEMS (IROS), 2011 IEEE/RSJ INTERNATIONAL CONFERENCE ON, IEEE, 25 September 2011, pages 3982-3989, discloses a method to label areas in a pre-built map using information from camera images, which method labels the area that is viewed in the camera image rather than just the current robot location. The document further discloses that place labels are generated from the image input using the PLISS system.

D. Richter et al., "Upgrade and benchmarking of a 4D treatment planning system for scanned ion beam therapy", MEDICAL PHYSICS, vol. 40, no. 5, 1 May 2013, discloses a data model for 4D image segmentation using Boolean mask volume datasets and developed an algorithm propagating a manually contoured reference contour dataset to all 4D treatment planning system (4DCT) phases.

### Summary

The object of the invention is to provide a robust method for analysing images to determine regions of interest (ROI) in the image.

Further, the invention aims to offer an alternative way to represent two-dimensional polygons and perform actions like addition and subtraction of these polygons. It also strives to be less fragile and more robust than existing solutions by modifying the problem formulation to simplify line segment intersection computations.

The method may in particular be applied to medical images, showing parts of a subject.

The general idea of the invention is the use of ROI algebra to identify a polygon or several polygons in an image, such as a slice image from a computer tomography scan, by overlaying the polygon(s) with a grid and calculating intersection points between the grid lines and the polygon segment lines or straight polygon lines.

The invention is defined by the independent claims. Embodiments are defined by the dependent claims.

The invention relates to a procedure for representing a first region in an image and comprises the steps of:
- Depicting an outer contour of the first region using a first polygon comprising at least three straight polygon lines;
- Overlaying the image comprising the first polygon with a grid that has regularly spaced straight grid lines or straight grid line segments in both a primary direction and a secondary direction;
- Calculating intersection points between the straight polygon lines and straight grid lines;
- Numbering all the calculated intersection points, starting with an odd or uneven number for each straight grid line viewed from one side of the grid for the primary direction and from the other side of the grid for the secondary direction, and
- Establishing a first grid representation of the first polygon by eliminating or removing any straight grid lines not comprising any intersection points, by eliminating or removing parts of each remaining straight grid line prior to an odd intersection point, which represents an intersection point entering the first polygon and by eliminating or removing parts of each remaining straight grid line after an even intersection point, which signifies an intersection point exiting the first polygon until either another odd intersection point or border of the image is reached. If another odd intersection point is reached, then the part of the remaining straight grid line that is followed by an odd intersection point is reached is kept again, while a remaining part of the remaining straight grid line is removed again if another even intersection point is reached and so on. Finally this step of establishing a first grid representation also includes removing the at least three straight polygon lines of the first polygon, so that the first grid representation remains, illustrated by straight grid line segments or line segments, each having a start point and an end point, in the first direction and the second direction.

The straight polygon lines may be called straight polygon line segments and the straight grid lines may be called straight grid line segments.

The above method allows to represent a polygon in an image, and therewith a potential ROI or just in general a region with a first grid representation. The first polygon is thus represented by a plurality of grid line segments, which allows to treat the first polygon and any calculations thereof or therewith as a one-dimensional computational problem.

This reduces required computing power substantially and also allows to represent ROIs that consist or comprise several polygons, subtracted or added, to be much better represented as explained further below.

The grid may comprise vertical straight grid lines and horizontal straight grid lines. Each intersection point is associated with a vertical straight grid line or horizontal straight grid line, to which it belongs.

Embodiments may further include repeating steps according to the method above for a second region and a second polygon in the image using the same grid. This results in establishing a second grid representation.

This can be repeated for several further polygons, depending on the ROI.

Embodiments of the method then further include step of:
- Overlaying first grid representation with this newly formed second grid representation to arrive at an overlaid grid representation.

The overlaid grid representation can then be used for subtraction purposes or addition purposes as described further below.

Embodiments as disclosed herein further include the steps of:
- Subtracting the second grid representation from the first grid representation by removing all line segments representing the second grid representation for each of the straight grid lines of the overlaid grid representation to arrive at remining line segments each having a start point and an end point, and
- Interconnecting each intersection point with nearest next intersection point by moving up, left, down or right using straight lines until all intersection points become part of closed polygons representing ROIs.

The embodiment according to the above therewith allows to subtract polygons from one another without losing any part of the ROI that is of interest. This is difficult if not impossible to achieve with existing solutions, especially with limited computing power, which is typically the case as radiation therapy systems are not replaced that often.

In another embodiment the method according to the invention may include the steps of:
- Adding the second grid representation to the first grid representation by adding the line segments of the second grid representation to the line segments of the first grid representation for each of the straight grid lines of the overlaid grid representation to arrive at added line segments each having a start point and an end point, and
- Interconnecting each start point and end point, respectively, with the next start point or end point by looking up, right, down and left taking into account geometric considerations, using polygon lines until a polygon is closed and until all start points and end points are part of a polygon in order to represent a region of interest by one or several polygons.

The method therewith also allows to add two or more polygons to arrive at an ROI using a one-dimensional approach using line segments in particular added line segments, as described.

This method can be applied on two-dimensional polygons represented on slice images obtained through medical scans such as computer tomography or magnetic camera scans.

In an embodiment intersection points get calculated and stored as one-dimensional information based on corresponding straight grid lines.

This may enhance computational efficiency while reducing memory usage.

The grid may be designed so that the straight lines arranged along the primary and the straight grid lines arranged along the secondary directions are oriented perpendicularly to one another and spaced at regular intervals d. This may further reduce required computing power and it may also enhance accuracy during calculations.

The distance d could range anywhere between 0.01mm to 2mm but preferably lies between 0.1mm-0.4mm ensuring optimal balance between precision and computational efficiency.

The method described herein may be used for medical images especially computer tomography scan images where precise identification and analysis of ROIs significantly enhance quality outcomes for various medical applications and treatments.

The invention also extends to a computer program product comprising computer readable means which, when executed in a computer, will cause the computer to perform the method as described above.

Disclosed herein is also a radiation therapy planning system equipped with a processor and memory that comprises a computer program product enabling it to perform the method as described previously.

This invention offers several benefits including reduced computation times and memory usage due to two-dimensional representation of three-dimensional structures, increased chance of visually pleasing results, since underlying polygons are followed exactly, and insensitivity towards whether one contour is located inside or overlapping another contour.

Definition of terms used herein:
In this disclosure certain terms and technical specifications will be used, some of them are explained referring to the figures and some of them are herewith explained and specified for optimal understanding of the described invention:

### Region including first, second, third region

The term 'region' in general refers to a finite portion of a space, typically a three-dimensional space, which may or may not have a specific form or structure. The term 'first region' specifically refers to the primary area of concern or focus in the given context or the initial area being examined or manipulated in the process. A region could represent various aspects in this context, for instance, a part of an image, a portion of a body, a section of a grid, depending on the specific application and context. In here the term region refers to a part of an image, which part represents an area that is of interest. It could be a tumour, an organ that should be protected, another tissue part that is at risk or even something outside the body that is of interest because it needs protection, for example from radiation exposure. The region is typically described and represented in the image using a polygon.

### Grid

A 'grid' refers to a network of lines that cross each other to form a series of squares or rectangles. In here when the term 'grid' is used it refers to a grid having straight lines, which are basically straight grid line segments (c.f. definition of line segments below). However, it is to be noted that the grid used herein can be adjusted in square or rectangle size depending on the granularity needed. The 'grid lines' or 'straight grid lines' are the individual lines making up the grid and they each have a defined starting point and end point, which typically coincide with a border of the grid and/or image. There are both 'straight grid lines in a first direction' and 'straight grid lines in a second direction', which together form the grid structure. In an embodiment these grid lines in first direction may be oriented perpendicular to grid lines in a second direction, thereby forming a regular pattern of squares or rectangles. In embodiments the first direction and the second direction may however be oriented at angle to one another that is not 90 degrees but inclined, either at a sharp angle or at an obtuse angle. The straight grid lines may also be called straight grid line segments as they all have a start point and an endpoint.

### Polygon including first, second, third and so on polygon

A 'polygon' in this context refers to a two-dimensional object representing an area of interest or region of interest. The 'first polygon' specifically refers to the primary polygonal structure being used or manipulated in the given context. The 'first polygon' may represent a tumour, an organ at risk, tissue that needs to be treated or protected or structures outside the body that are of interested either to be protected or treated. The same can be said for subsequent, second, third and so on polygons. In the context of this invention, the polygons represent or define regions within the image, with their contours defining the boundaries of these regions. The polygons have at least three straight polygon lines, which are the sides of the polygon. The polygon lines are basically line segments having a fixed start and end point as described below under "line segment and line segments". Herein the line segments describing a polygon are called straight polygon lines to avoid misinterpretation between the different lines explained herein. The at least three straight polygon lines are thereby connected with one another so that the 'polygon' always describes a closed shape. If the area or region of interest extends out of the image, the borders of the image, which image is typically rectangular, may be used as straight polygon lines, in order to close the shape. The number of lines may be chosen so that the region of interest or area of interest can be described most accurate. In here the term polygon refers to a two-dimensional structure. The lines or straight lines describing the polygon may be called polygon lines or polygon line segments as they each have a start point and an end point.

### Intersection Points

'Intersection points' or 'intersections' refer to the points at which two or more lines cross or meet, either polygon lines or straight grid lines or border lines of the image. In the context of this invention, the intersection points are calculated as the points where the straight polygon lines intersect with the straight grid lines. These intersection points are determining the grid representation of the polygon.

### Grid Representation

A 'grid representation' refers to a representation or depiction of an object (in this case, a polygon or region) using a grid structure. This involves overlaying the grid onto the object or region of interest and modifying the grid based on the object's form or structure and the calculated intersection points. Various regions or areas may be represented using a 'first grid representation' and a 'second grid representation' and so on. The grid representations disclosed herein typically do not comprise any polygon line segments or straight polygon lines. Multiple areas, ROIs or objects may be represented in this way using polygons and grid overlays. One may arrive at a grid representation by removing certain line segments from the straight grid lines by applying the knowledge that when intersection points on a straight grid line are numbered in sequence starting with an odd number, then the line segment after the odd number always represents "entering into the polygon" while an even number of such an intersection point represents "exiting out of the polygon". A grid representation is typically made of several line segments arranged in both directions. This way any of the polygons can be represented using a grid representation. This is further explained referring to the figures.

### Overlaid grid representation

In here the term overlaid grid representation describes a grid representation that comprises an overlay of a first grid representation and a second grid representation and/or any further grid representation, if present. An overlaid grid representation comprises all line segments in both directions of the grid, which line segments represent the first polygon/first grid representation, the second polygon/the second grid representation and any further polygon, if present. It is to be noted that due to the use of the identical grid in all overlays the line segments of the first and second grid presentation are congruent but do not have necessarily the same length depending on the shapes of grid representations that are overlaid. The overlaid grid representation comprises line segments of the first grid representation and line segments of the second grid representation.

### Image

The term 'image' herein refers to a representation of an area that is of interest to the application. This may be a moving image, a medical image, an image from a game, an image representing any sort of virtual reality or augmented reality or simply a photo. In particular, in this disclosure, an image may refer to a visual representation generated by an imaging device such as a scanner, a camera, a computer tomography scanner or an MRI scanner.

### Odd or uneven (numbers)

The term odd or uneven herein refers to numbers such as 1, 3, 5, 7, 9 and so on, which numbers can basically not be divided by 2 (two) without generating non-integer numbers. In decimal calculations, the numbers that appear before the decimal point are typically referred to as the integer part or whole number, while the numbers after the decimal point are commonly known as the fractional part or decimal fraction. An odd or uneven number therewith becomes a number having a fractional part or decimal fraction when it is divided by 2 (two). Contrary an even number is represented by 2, 4, 6, 8, 10 and so on. When divided by 2 (two) the even number becomes an integer without fractional part or decimal fraction.

### First and second side of grid

Herein the term first and second side of grid refer to two sides of the grid, which is typically shaped as a rectangle. The first and second side thereby refer to two sides that are oriented perpendicular to one another, thus oriented at a 90° angle. In theory the grid can have another shape, the first and second direction basically refer to directions that are not parallel with one another.

### Line segment and line segments

Herein a line segment refers to a geometric concept defined as a straight path between two fixed endpoints. A line segment has a definite length determined by the distance between its two endpoints or between a start point and an end point. The length of a line segment can be measured using metric units like centimetres or millimetres, or customary units such as feet or inches. Line segments are integral components of polygons, forming the sides of shapes like triangles, squares, and pentagons. A line segment is straight and has two distinct endpoints that define its length, precisely.

### Geometric considerations

The geometric considerations described herein is an algorithm used to navigate and connect start points and end points from remaining line segments to arrive at a region of interest (ROI) represented by closed polygons. It's a methodical approach to determine the next point a path should move to, based on the position and availability of neighbouring line segments to establish polygon structure. The algorithm operates under a set of geometric rules and uses remaining vertical and horizontal line segments to define the structure of the polygon. The basic elements of the algorithm comprise:
Horizontal Line Segments: Represent a part of an ROI.

Vertical Line Segments: Also, a part of the same ROI typically extending perpendicular to the horizontal segments.

Current Point, which is an end point or start point of a horizontal line segment: The specific point or line segment start or end under consideration.

Target Point, which is an end point or start point of another horizontal line segment: The point that the algorithm aims to connect with the current point.

### Operational Logic:

The algorithm typically begins at a specific point on the polygon and aims to find the next point to which it should connect. It primarily moves from the bottom upwards, evaluating the space directly above the current point to determine the next course of action, thereby different scenarios are considered:

### Scenarios and Actions:

No line segment or line segment interval above: If there's no direct horizontal line segment of the ROI (remaining line segments) above the current point, the algorithm searches for a neighbouring line segment interval in the straight horizontal grid line above that starts before the end of the current line segment interval.

Line segment or line segment interval directly above: If there is a continuation of the ROI (remaining line segments) directly above, the algorithm then looks for a new point either on the same straight horizontal grid line or on the straight horizontal grid line above, depending on whether the upper line segment or line segment interval extends beyond the current point.

### Decision-Making:

Based on whether there are adjacent upper line segments or line segment intervals in specific directions, the algorithm decides the next point to connect to:
If a line segment interval or a line segment exists above and begins before the current line segment's end, the next connection is upwards. The algorithm always looks up first.

If no such line segment or line segment interval exists above but there's room to extend horizontally, the polygon line extends within the same straight horizontal grid line. Conversely, if there is no room to extend or move upward, the algorithm may reverse direction, moving right, downwards, or leftwards to seek new end points or start points.

### Refinement with vertical line segments:

The path between the current point and the next point can be refined using vertical line segments and their in-range end points or start points, which represent vertical boundaries of the polygon and ROI, respectively.

This algorithmic process is repeated iteratively to traverse the entire structure of the polygon, connecting points to form a coherent path or shape until no "free" end points or start points are left.

Other algorithms similar to the above may however be used to interconnect the end points and start points of the remaining line segments.

The skilled person would readily recognize that this invention encompasses variations on the embodiments described herein. Such variations may include, but are not limited to, the replacement of features, elements, and/or acts with equivalent alternatives, the combination and mixing of features, elements, and/or acts from different embodiments, the incorporation of features, elements, and/or acts from other technologies, and the omission of certain features, elements, and/or acts from the disclosed embodiments.

While specific embodiments are illustrated and described in detail in the drawings and accompanying description, it should be understood that these embodiments are provided by way of example and not intended to limit the invention to these specific forms or shapes in particular the illustrated polygon shapes. The intention is to encompass all modifications, equivalents, and alternatives within the technological realm of the present invention as defined by the appended claims.

The headings used throughout this application are purely for organizational purposes and do not serve to limit the scope of the description. The word "may" is used in a permissive sense, indicating the potential to perform a certain action or possess a certain characteristic. The terms "include," "including," and "includes" indicate open-ended relationships, encompassing but not limited to the mentioned examples. Similarly, the terms "have," "having," and "has" also indicate open-ended relationships, indicating the possession of certain characteristics or features without limitation.

The detailed description and specific details provided herein are intended to provide a thorough understanding of the invention. However, the invention may be practiced without these specific details, and well-known elements or components may be omitted to avoid obscuring the invention unnecessarily. The specification and drawings should be regarded in an illustrative sense, rather than a restrictive sense.

The appended claims and any subsequent claims are intended to encompass all modifications, permutations, additions, omissions, and sub-combinations that may reasonably be inferred from the present disclosure. The scope of the claims should not be limited by the preferred embodiments or examples described but should be given the broadest interpretation consistent with the description as a whole and the terms as used in the relevant field.

### Brief Description of the Drawings

The invention will be described in more detail in the following, by way of example and with reference to the appended drawings, in which
- Figure 1:: schematically illustrates a first polygon that represents a first area;
- Figure 2:: schematically illustrates the first polygon being overlaid with a grid;
- Figures 3 and 4:: schematically illustrate how the first polygon is represented through a first grid representation;
- Figures 5a and 5b: schematically illustrates how a second polygon is overlaid;
- Figures 6 to 8: schematically illustrate how the second polygon is subtracted from the first polygon;
- Figure 9: schematically illustrates how the second polygon is added to the first polygon;
- Fig 10: schematically illustrates a method according to the present disclosure, and
- Fig. 11: schematically illustrates a radiation therapy treatment planning system that can perform the method according to the present invention.

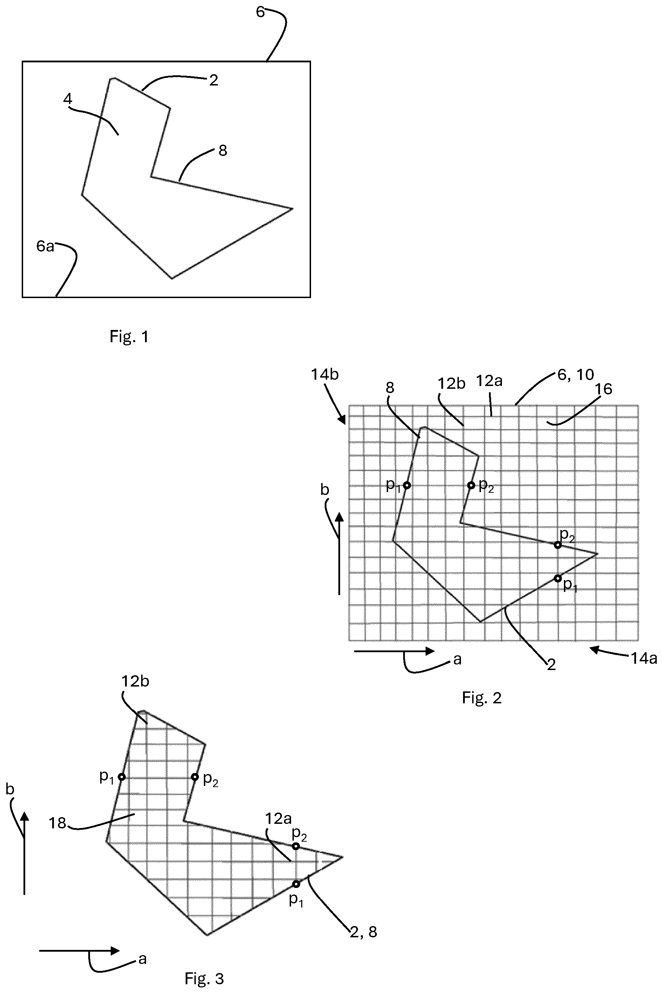

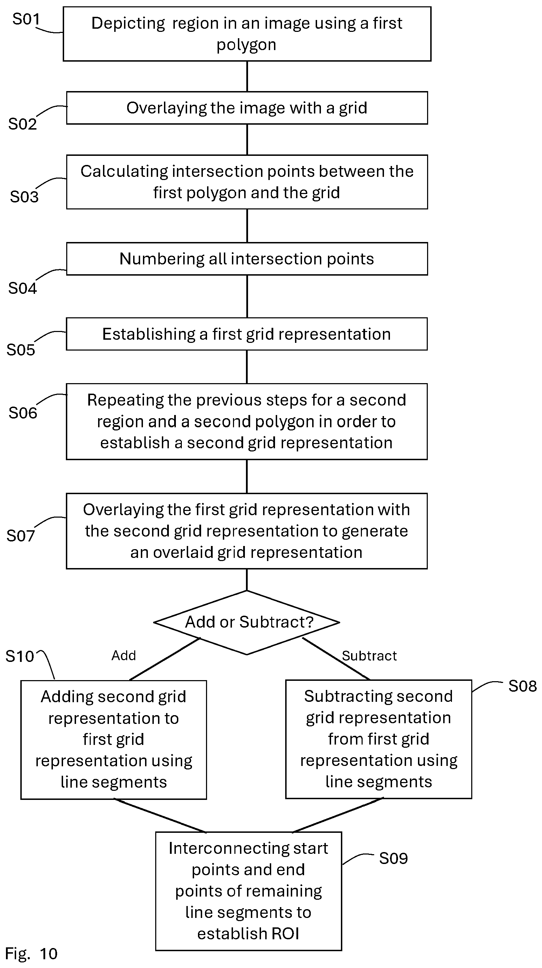

Figure 1 illustrates a first polygon 2 that represents a first area or region 4 within an image 6. The first polygon 2 comprises a plurality, at least three, straight polygon lines 8, in the illustrated example, the first polygon 2 comprises seven straight polygon lines 8 that define a closed polygon shape. Here it is to be noted that, if the area of interest that is described using a polygon is not entirely within the image 6, the border 6a of the image 6 may be used to close a polygon describing such an area of interest. In view of the previous, figure 1 basically describes a depicting (S01, c.f. figure 10) of an outer contour of the first region 4 using the first polygon 2 having at least three straight polygon lines or polygon line segments 8 (seven in the illustrated example).

Referring now to figure 2, the image 6 is overlaid with a grid 10. The grid 10 comprises a plurality of squares or rectangles 16, in the example 16 x 16, arranged along a first direction a and a second direction b so that the rectangles or squares 16 form a grid. The grid 10 comprises straight grid lines 12a, 12b arranged parallel to a first direction a and a second direction b, respectively. The grid 10 overlays or covers the first polygon 8 so that various intersection points p₁ to pₙ between the straight polygon lines 8 and the straight grid lines 12a, 12b in both directions a, b are formed. The intersection points p₁ to pₙ are calculated along each of the straight grid lines 12a, 12b and starting for all grid lines 12b coming from a first side 14a of the grid 10 and then coming from a second side 14b of the grid 10. When calculating the intersection points p₁ to pₙ along one straight grid line 12a, 12b the first intersection point p₁ is numbered using an odd or uneven number, in the illustrated example 1 and the next intersection point along the same straight grid line 12a, 12b is given an even number and so on until the border 6a of the image 6 or grid 10 is reached. These intersection points p₁ to pₙ are then stored for each of the straight grid lines 12a, 12b including their sequence number. In view of the above, figure 2 describes overlaying (S02, c.f. figure 10) the image 6 comprising the first polygon 2 with the grid 10 having regularly spaced straight grid lines 12a in a first direction a and regularly spaced straight grid lines 12b in a second direction b. Figure 2 also illustrates the step of calculating (S03, c.f. figure 10) all intersection points p₁ to pₙ between the at least three straight polygon lines 8 and the straight grid lines, 12a, 12b. Finally figure 2 also describes the numbering (S04, c.f. figure 10) all intersection points p₁ to pₙ starting with an uneven number for each of the straight grid lines 12a, 12b as seen from a first side 14a of the grid 10 for the second direction b and as seen from a second side 14b of the grid 10 for the first direction a.

In order to arrive at a first grid representation 18 of the first polygon 8, certain straight grid lines 12a, 12b and parts of straight grid lines 12a, 12b are removed according to the following procedure, explained referring to figure 3. For establishing (S05, c.f. figure 10) a first grid representation 18 of the first polygon 2, firstly the straight grid lines 12a, 12b that are not comprising any intersection points p₁ to pₙ are removed. Secondly all parts of each of the remaining straight grid lines 12a, 12b that are prior to an uneven intersection point p₁, which uneven intersection point p₁ represents an intersection point p₁ going into the first polygon 2, are removed, then also parts of each of the remaining straight grid lines 12a, 12b that are after an even intersection point p₂, which represents an intersection point p₂ going out of the first polygon 2, are removed. This is continued until all intersection points p₁ to pₙ along the straight grid line 12a, 12b at hand are analysed and until a border 6a of the image 6 is reached (not illustrated in figure 3).

Establishing (S05, c.f. figure 10) the first grid representation 18 therewith includes to keep parts of the remaining straight grid lines 12a, 12b that extend from an uneven intersection point p₁ to an even intersection point p₂.

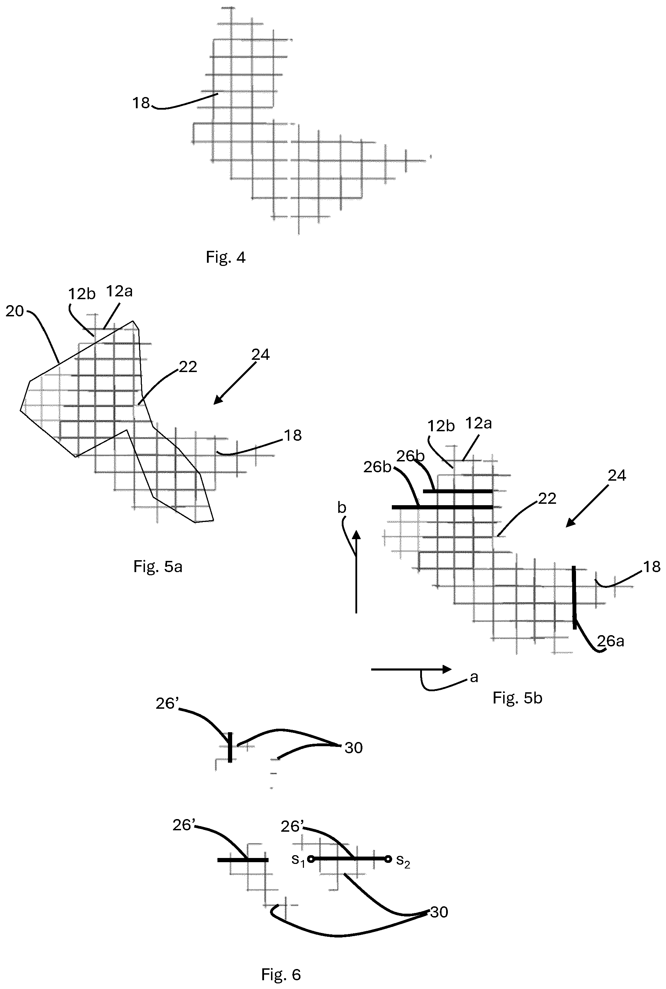

Further, the straight polygon lines 8 of the first polygon 2 are removed so that a first grid representation 18 of the first polygon 2 is established as shown in figure 4. A first grid representation 18 makes it easier to store and represent the first polygon 2 using intersection points p₁ to pₙ as the geometry is reduced to one-dimensional representations, following a straight grid line 12a, 12b at a time. Using the grid 10 approach as described, decreases needed computer capacity and increases accuracy. It also enables subtracting or adding a second polygon 20 to the first polygon 2 and first grid representation 18, respectively, as now described referring to figures 5 to 9, whereby figures 5a and 5b describe the generation of an overlaid grid representation 24.

Figures 6 to 8 illustrate the subtraction (S08, c.f. figure 10) of the region represented by the second polygon 20 from the first polygon 2 and the first grid representation 18, respectively.

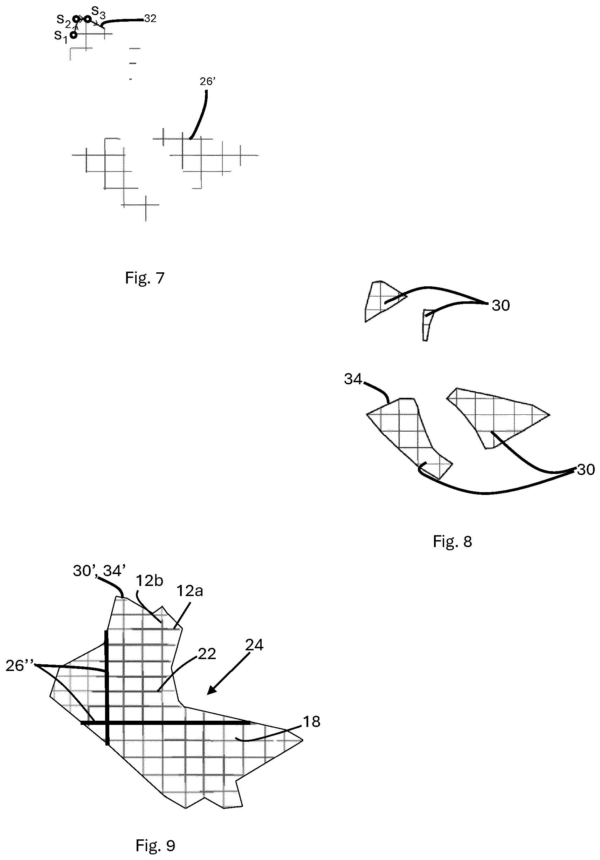

Figure 9 illustrates the addition of the second polygon 20 to the first polygon 2 and the first grid representation 18, respectively.

Referring to figure 5a, the previously described steps are repeated for the second polygon 20 illustrating a second region to arrive at a second grid representation 22. The second grid representation 22 is then overlaid (S07, c.f. figure 10) onto the first grid representation 18 with the border 6a (c.f. figure 1) as reference to produce or model an overlaid grid representation 24.

Turning now to figure 5b, the subtraction of the second grid representation 22 from the first grid representation 18 is now explained. Each grid representation 18, 22 comprises various line segments 26a, 26b and therewith the problem of subtracting (S08, c.f. figure 10) the second grid representation 22 from the first grid representation becomes one-dimensional. For each of the remaining straight grid lines 12a, 12b of the overlaid grid representation 24 in the first direction a and the second direction b the line segments 26b of the second grid representation 22 are removed from the line segments 26a of the first grid representation 18 to arrive at remaining line segments 26' (c.f. figure 6). Only the remaining line segments 26' (c.f. figure 6) are kept.

Referring now to figure 6, each remaining line segment 26' is represented by a starting point s₁ and an endpoint s₂. The remaining line segments 26' together in both, the first direction a and the second direction b represent a region of interest 30.

Using line segments 26, 26' as disclosed referring to figures 5a to 6 allows to safe compute capacity and increase accuracy. Together with the knowledge of the position of the border 6a of the image 6 and grid 10 respectively (c.f. figures 1 and 2), the subtracting of the line segments 26 of the second grid representation 22 from the line segments 26' of the first grid representation becomes a rather easily solvable math or computational problem.

Turning now to figures 7 and 8, the representation of the region of interest 30 by interconnecting (S09, c.f. figure 10) the endpoints of all remaining line segments 26' is explained. A starting point s₁ is chosen and it is searched in an upward or north direction, then eastwards or right, then downwards or south and then westwards or right taking geometric considerations into account and a next point s2 is chosen to determine the polygon line segment 32 to connect points s₁ and s₂. This interconnecting (S09) step is repeated until the polygon at hand is closed and until all remining start points and end points of the remaining line segments 26' are part of a polygon 34, as illustrated in figure 8. The combination of all polygons 34 established in the described way then represent the region of interest 30.

Turning now to figure 9 it is illustrated how the second grid representation 22 can be added (S10) to the first grid representation 18 using a very similar approach as described referring to figures 5b to 8. However, instead of subtracting the line segments 26a, 26b of the first grid representation 18 and the second grid representation 22, respectively, the line segments 26a, 26b are added to one another for each remaining straight grid line 12a, 12b to arrive at remaining line segments 26" or in this case added line segments 26". The added line segments 26" then also each have a starting point and an end point which can be interconnected (S09) in order to arrive at a polygon 34' that represents a different region of interest 30' illustrated by adding the first polygon 2 and the second polygon 20.

Turning to figure 10, the method of the present disclosure is herewith illustrated.

The method according to this disclosure comprises the steps of:
- depicting S01 an outer contour of the first region using a first polygon having at least three straight polygon lines;
- overlaying S02 the image comprising the first polygon with a grid having regularly spaced straight grid lines in a first direction and regularly spaced straight grid lines in a second direction;
- calculating S03 all intersection points between the at least three straight polygon lines and the straight grid lines,
- numbering S04 all intersection points starting with an uneven number for each of the straight grid lines as seen from a first side of the grid for the second direction and as seen from a second side of the grid for the first direction; and
- establishing S05 a first grid representation of the first polygon by removing the straight grid lines that are not comprising any intersection points and by removing parts of each of the remaining straight grid lines that are prior to an uneven intersection point, which uneven intersection point represents an intersection point going into the first polygon and by removing parts of each of the remaining straight grid lines that are after an even intersection point, which represents an intersection point going out of the first polygon, until the next uneven intersection point, if any, or until a border of the image and by removing the at least three straight polygon lines of the first polygon, so that the first grid representation remains, illustrated by line segments, each having a start point and an end point, in the first direction and the second direction.

The steps S01 to S05 can then be repeated S06 for a second region using a second polygon and the same grid aligned with the grid used for the first grid representation, thereby establishing a second grid representation, and then the method further comprises the step of:
- overlaying S07 the first grid representation with the second grid representation thereby generating an overlaid grid representation.

When the overlaid grid representation is established, then a decision may be made if the second polygon should be added S10 to the first polygon or be subtracted S08 from the first polygon. These steps are described in the following in more detail:
- subtracting S08 the second grid representation from the first grid representation by removing all line segments representing the second grid representation for each of the straight grid lines of the overlaid grid representation to arrive at remaining line segments each having a start point and an end point;
   or
- adding S10 the second grid representation to the first grid representation by adding the line segments of the second grid representation to the line segments of the first grid representation for each of the straight grid lines of the overlaid grid representation to arrive at added line segments each having a start point and an end point;

To represent a region of interest 30, 30' the end points and start points of the remaining line segments or added line segments may then be interconnected S09. The interconnection step comprises:
- interconnecting S09 each start point and end point, respectively, with the next start point or end point by looking up, left, down and right taking geometric considerations into account, using polygon lines until a polygon is closed and until all start points and end points are part of a polygon to represent a region of interest by one polygon or several polygons.

It is to be noted that the above-described steps S01-S10 are referred to and mentioned when explaining the concept of this disclosure referring to figures 1 to 9.

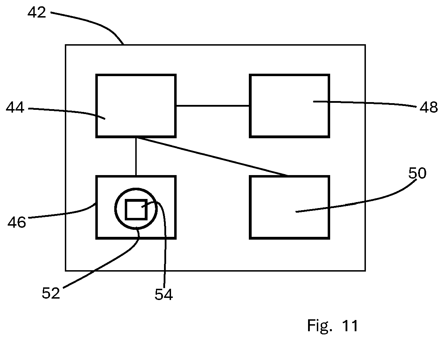

Figure 11 illustrates further a radiation therapy treatment planning system 42 comprising a processor 44, a memory 46 connected to the processor 44, an optional extra memory 50 also connected to the processor 44 and/or the memory 46 and an input/output interface 48 having a display and/or a keyboard for user interaction. The processor 44 may be any combination of a central processing unit (CPU), multiprocessor, digital signal processor (DSP), an ASIC (application specific integrated circuit) capable of executing software instructions stored on the memory and capable of executing the methods described according to the embodiments herein. The memory 46 and/or the extra memory 50 may comprise software code in the form of a computer program product 52 comprising computer software 54 or instructions that comprise any method according to this disclosure and that can perform any method according to this disclosure. The computer software 54 may be executed by the processor 44.

The memory 46 and the extra memory 50 may be any of a random access memory (RAM) or read only memory (ROM) or any combination thereof.

The invention has now been described referring to the figures. These figures are however to be interpreted in the broadest sense and fashion. In particular the polygons illustrated in the figures have only illustrative character and their shape and number can vary. The method described herein can cope with such variations and is therewith robust.

## Claims

1. A computer-implemented method for representing a first region in an image, the method comprising the steps of:
- Depicting (S01) an outer contour of the first region using a first polygon having at least three straight polygon lines;
- Overlaying (S02) the image comprising the first polygon with a grid having regularly spaced straight grid lines in a first direction and regularly spaced straight grid lines in a second direction;
- Calculating (S03) all intersection points between the at least three straight polygon lines and the straight grid lines,
- Numbering (S04) all intersection points starting with an uneven number for each of the straight grid lines as seen from a first side of the grid for the second direction and as seen from a second side of the grid for the first direction;
- Establishing (S05) a first grid representation of the first polygon by removing the straight grid lines that are not comprising any intersection points and by removing parts of each of the remaining straight grid lines that are prior to an uneven intersection point as seen from a first and second direction, respectively, and by removing parts of each of the remaining straight grid lines that are after an even intersection point as seen from a first and second direction, respectively, until the next uneven intersection point, if any, or until a border of the image and by removing the at least three straight polygon lines of the first polygon, so that the first grid representation remains, illustrated by line segments, each having a start point and an end point, in the first direction and the second direction; and
- Repeating (S06) the aforementioned steps of depicting, overlaying, calculating, numbering, and establishing for a second region using a second polygon and the same grid aligned with the grid used for the first grid representation, thereby establishing a second grid representation, and
- Overlaying (S07) the first grid representation with the second grid representation thereby generating an overlaid grid representation;
wherein the method further comprises the step of:
- Subtracting (S08) the second grid representation from the first grid representation by removing all line segments representing the second grid representation for each of the straight grid lines of the overlaid grid representation to arrive at remaining line segments each having a start point and an end point, or
- Adding (S10) the second grid representation to the first grid representation by adding the line segments of the second grid representation to the line segments of the first grid representation for each of the straight grid lines of the overlaid grid representation to arrive at added line segments each having a start point and an end point, and
wherein the method further comprises the step of:
- Interconnecting (S09) each start point and end point, respectively, with the next start point or end point by looking up, right, down and left using polygon lines until a polygon is closed and until all start points and end points are part of a polygon in order to represent a region of interest by one polygon or several polygons.

2. The method according to claim 1, wherein the first polygon and the second polygon are two dimensional polygons represented on a slice image of a medical scan, such as computer tomography scan or a magnetic camera scan.

3. The method according to any of the previous claims, wherein the intersection points are calculated and stored as one-dimensional information.

4. The method according to any of the previous claims, wherein the straight grid lines arranged in the first direction and the straight grid lines arranged in the second direction are oriented rectangular to one another and at regular intervals d in the first direction and the second direction.

5. The method according to claim 4, wherein the distance d is chosen to be anything from 0.01 mm to 2 mm, preferably from 0.1 mm to 0.4 mm.

6. The method according to any of the previous claims, wherein the method is used for medical images in particular computer tomography scan images.

7. A computer program product comprising computer readable means which, when executed in a computer, will cause the computer to perform the method according to any one of the preceding claims.

8. A radiation therapy planning system (42) comprising a processor (44), a memory (46), wherein the memory comprises a computer program product according to claim 7, the radiation therapy planning system being designed to perform the method according to any of the preceding claims 1 to 6.

## Patentansprüche

1. Computerimplementiertes Verfahren zum Darstellen eines ersten Bereichs in einer Aufnahme, das Verfahren umfassend die Schritte:
- Abbilden (S01) einer äußeren Kontur des ersten Bereichs unter Verwendung eines ersten Polygons, das mindestens drei gerade Polygonlinien aufweist;
- Überlagern (S02) der Aufnahme, umfassend das erste Polygon, mit einem Gitter, das regelmäßig beabstandete gerade Gitterlinien in einer ersten Richtung und regelmäßig beabstandete gerade Gitterlinien in einer zweiten Richtung aufweist;
- Berechnen (S03) aller Schnittpunkte zwischen den mindestens drei geraden Polygonlinien und den geraden Gitterlinien,
- Nummerieren (S04) aller Schnittpunkte, angefangen mit einer ungeraden Zahl für jede der geraden Gitterlinien, wie von einer ersten Seite des Gitters für die zweite Richtung gesehen und wie von einer zweiten Seite des Gitters für die erste Richtung gesehen;
- Erstellen (S05) einer ersten Gitterdarstellung des ersten Polygons durch Entfernen der geraden Gitterlinien, die keine Schnittpunkte umfassen, und durch Entfernen von Teilen jeder der verbleibenden geraden Gitterlinien, die vor einem ungeraden Schnittpunkt liegen, wie aus einer ersten beziehungsweise einer zweiten Richtung gesehen, und durch Entfernen von Teilen jeder der verbleibenden geraden Gitterlinien, die nach einem geraden Schnittpunkt liegen, wie aus einer ersten beziehungsweise einer zweiten Richtung gesehen, bis zu dem nächsten ungeraden Schnittpunkt, falls vorhanden, oder bis zu einer Grenze der Aufnahme, und durch Entfernen der mindestens drei geraden Polygonlinien des ersten Polygons, sodass die erste Gitterdarstellung verbleibt, veranschaulicht durch Liniensegmente, die jeweils einen Anfangspunkt und einen Endpunkt aufweisen, in der ersten Richtung und der zweiten Richtung; und
- Wiederholen (S06) der vorgenannten Schritte des Abbildens, Überlagerns, Berechnens, Nummerierens und Erstellens für einen zweiten Bereich unter Verwendung eines zweiten Polygons und des gleichen Gitters, das mit dem Gitter, das für die erste Gitterdarstellung verwendet wird, ausgerichtet ist, wobei dadurch eine zweite Gitterdarstellung erstellt wird, und
- Überlagern (S07) der ersten Gitterdarstellung mit der zweiten Gitterdarstellung, wobei dadurch eine überlagerte Gitterdarstellung erzeugt wird;
wobei das Verfahren ferner den Schritt umfasst:
- Subtrahieren (S08) der zweiten Gitterdarstellung von der ersten Gitterdarstellung durch Entfernen aller Liniensegmente, die die zweite Gitterdarstellung darstellen, für jede der geraden Gitterlinien der überlagerten Gitterdarstellung, um verbleibenden Liniensegmente, die jeweils einen Anfangspunkt und einen Endpunkt aufweisen, zu erreichen, oder
- Addieren (S10) der zweiten Gitterdarstellung zu der ersten Gitterdarstellung durch Addieren der Liniensegmente der zweiten Gitterdarstellung zu den Liniensegmenten der ersten Gitterdarstellung für jede der geraden Gitterlinien der überlagerten Gitterdarstellung, um addierte Liniensegmente, die jeweils einen Anfangspunkt und einen Endpunkt aufweisen, zu erreichen und
wobei das Verfahren ferner den Schritt umfasst:
- Verbinden (S09) jedes Anfangspunkts beziehungsweise Endpunkts mit dem nächsten Anfangspunkt oder Endpunkt durch Blicken nach oben, rechts, unten und links unter Verwendung von Polygonlinien, bis ein Polygon geschlossen ist und bis alle Anfangspunkte und Endpunkte Teil eines Polygons sind, um einen interessierenden Bereich durch ein Polygon oder mehrere Polygone darzustellen.

2. Verfahren nach Anspruch 1, wobei das erste Polygon und das zweite Polygon zweidimensionale Polygone sind, die auf einer Schichtaufnahme eines medizinischen Scans, wie eines Computertomografie-Scans oder eines Magnetkamera-Scans, dargestellt sind.

3. Verfahren nach einem der vorstehenden Ansprüche, wobei die Schnittpunkte als eindimensionale Informationen berechnet und gespeichert werden.

4. Verfahren nach einem der vorstehenden Ansprüche, wobei die geraden Gitterlinien, die in der ersten Richtung angeordnet sind, und die geraden Gitterlinien, die in der zweiten Richtung angeordnet sind, rechtwinklig zueinander und in regelmäßigen Intervallen d in der ersten Richtung und der zweiten Richtung orientiert sind.

5. Verfahren nach Anspruch 4, wobei die Entfernung d gewählt ist, um etwas Beliebiges von 0,01 mm bis 2 mm, vorzugsweise von 0,1 mm bis 0,4 mm, zu betragen.

6. Verfahren nach einem der vorstehenden Ansprüche, wobei das Verfahren für medizinische Aufnahmen, insbesondere Computertomografie-Scan-Aufnahmen, verwendet wird.

7. Computerprogrammprodukt, umfassend computerlesbare Mittel, die, wenn sie auf einem Computer ausgeführt werden, den Computer veranlassen werden, das Verfahren nach einem der vorstehenden Ansprüche durchzuführen.

8. Strahlentherapieplanungssystem (42), umfassend einen Prozessor (44), einen Speicher (46), wobei der Speicher ein Computerprogrammprodukt nach Anspruch 7 umfasst, wobei das Strahlentherapieplanungssystem gestaltet ist, um das Verfahren nach einem der vorstehenden Ansprüche 1 bis 6 durchzuführen.

## Revendications

1. Procédé mis en oeuvre par ordinateur pour représenter une première région dans une image, le procédé comprenant les étapes consistant à :
- illustrer (S01) un contour externe de la première région à l'aide d'un premier polygone ayant au moins trois lignes polygonales droites ;
- superposer (S02) l'image comprenant le premier polygone avec une grille ayant des lignes de grille droites régulièrement espacées dans une première direction et des lignes de grille droites régulièrement espacées dans une seconde direction ;
- calculer (S03) tous les points d'intersection entre les au moins trois lignes polygonales droites et les lignes de grille droites,
- numéroter (S04) tous les points d'intersection commençant par un nombre impair pour chacune des lignes de grille droites telles que vues d'un premier côté de la grille pour la seconde direction et telles que vues d'un second côté de la grille pour la première direction ;
- établir (S05) une première représentation de grille du premier polygone en supprimant les lignes de grille droites qui ne comprennent aucun point d'intersection et en supprimant des parties de chacune des lignes de grille droites restantes qui sont avant un point d'intersection impair telles que vues depuis une première et une seconde direction, respectivement, et en supprimant des parties de chacune des lignes de grille droites restantes qui sont après un point d'intersection pair telles que vues depuis une première et une seconde direction, respectivement, jusqu'au prochain point d'intersection impair, le cas échéant, ou jusqu'à une bordure de l'image et en supprimant les au moins trois lignes polygonales droites du premier polygone, de sorte que la première représentation de grille reste, illustrée par des segments de ligne, chacun ayant un point de début et un point de fin, dans la première direction et la seconde direction ; et
- répéter (S06) les étapes susmentionnées d'illustration, de superposition, de calcul, de numérotation et d'établissement pour une seconde région à l'aide d'un second polygone et de la même grille alignée avec la grille utilisée pour la première représentation de grille, établissant de ce fait une seconde représentation de grille, et
- superposer (S07) la première représentation de grille avec la seconde représentation de grille, générant de ce fait une représentation de grille superposée ;
dans lequel le procédé comprend en outre les étapes consistant à :
- soustraire (S08) la seconde représentation de grille de la première représentation de grille en supprimant tous les segments de ligne représentant la seconde représentation de grille pour chacune des lignes de grille droites de la représentation de grille superposée pour arriver à des segments de ligne restants ayant chacun un point de début et un point de fin, ou
- ajouter (S10) la seconde représentation de grille à la première représentation de grille en ajoutant les segments de ligne de la seconde représentation de grille aux segments de ligne de la première représentation de grille pour chacune des lignes de grille droites de la représentation de grille superposée pour arriver à des segments de ligne ajoutés ayant chacun un point de début et un point de fin, et
dans lequel le procédé comprend en outre les étapes consistant à :
- interconnecter (S09) chaque point de début et point de fin, respectivement, avec le point de début ou le point de fin suivant en regardant vers le haut, la droite, le bas et la gauche à l'aide de lignes polygonales jusqu'à ce qu'un polygone soit fermé et jusqu'à ce que tous les points de début et de fin fassent partie d'un polygone afin de représenter une région d'intérêt par un polygone ou plusieurs polygones.

2. Procédé selon la revendication 1, dans lequel le premier polygone et le second polygone sont des polygones bidimensionnels représentés sur une image de lamelle d'un balayage médical, tel qu'un balayage par tomodensitométrie ou un balayage par caméra magnétique.

3. Procédé selon l'une quelconque des revendications précédentes, dans lequel les points d'intersection sont calculés et stockés en tant qu'informations unidimensionnelles.

4. Procédé selon l'une quelconque des revendications précédentes, dans lequel les lignes de grille droites agencées dans la première direction et les lignes de grille droites agencées dans la seconde direction sont orientées de manière rectangulaire l'une par rapport à l'autre et à intervalles réguliers d dans la première direction et la seconde direction.

5. Procédé selon la revendication 4, dans lequel la distance d est choisie pour être une distance quelconque de 0,01 mm à 2 mm, de préférence de 0,1 mm à 0,4 mm.

6. Procédé selon l'une quelconque des revendications précédentes, dans lequel le procédé est utilisé pour des images médicales, en particulier des images de balayage par tomodensitométrie.

7. Produit programme d'ordinateur comprenant un moyen lisible par ordinateur qui, lorsqu'il est exécuté dans un ordinateur, amènera l'ordinateur à réaliser le procédé selon l'une quelconque des revendications précédentes.

8. Système de planification de radiothérapie (42) comprenant un processeur (44), une mémoire (46), dans lequel la mémoire comprend un produit programme d'ordinateur selon la revendication 7, le système de planification de radiothérapie étant conçu pour réaliser le procédé selon l'une quelconque des revendications précédentes 1 à 6.
